# EUROPÄISCHE PATENTANMELDUNG

(11) **EP 0 667 310 A1**
(43) Veröffentlichungstag der Anmeldung: **16.08.1995**
(21) Anmeldenummer: 94120891.0
(22) Anmeldetag: 29.12.1994
(51) Int. Cl.: B65G 47/08, B65G 47/82, B65G 57/24, B65G 57/32, B65B 35/40

(54) **Vorrichtung und Verfahren zum Palettieren von Stückgütern**

(30) Priorität: 09.02.1994 DE 4404017
(71) Anmelder: Maschinenfabrik Möllers GmbH u. Co., D-59269 Beckum (DE)
(72) Erfinder: Klüpfel, Olaf, Dr., D-59227 Ahlen-Vorhelm (DE)
(74) Vertreter: Patentanwälte Meinke, Dabringhaus und Partner

(57) **Zusammenfassung**

Bei einer Vorrichtung zum Palettieren von Stückgütern zu einem Stückgutstapel mit einem Stückgutzuführer, einer getakteten Transporteinrichtung und einer Einlaufrollenbahn mit einer Mehrzahl von antreibbaren Transportrollen sowie mit einem seitlichen Wartebereich, wobei zwischen den Rollen der Einlaufrollenbahn ein quer zur Vorschubrichtung verfahrbarer Einführer vorgesehen ist, welcher eine Mehrzahl von gegenüber dem Niveau der Rollenoberseite anheb- und absenkbaren bügelförmigen Hubelementen aufweist, der Stückgutdurchsatz erhöht und somit die Stapelbildung beschleunigt werden.

Dies wird dadurch erreicht, daß die bügelförmigen Hubelemente (19) des Einführers (18) an ihrer Oberseite stufenförmig mit wenigstens zwei Stückgutauflagestufen (19a,19b) ausgebildet sind, wobei jede Stufe (19a,19b) der bügelförmigen Hubelemente (19) über das Niveau der Rollenoberseite anhebbar ist.

## Beschreibung

Die Erfindung betrifft eine Vorrichtung zum Palettieren von Stückgütern zu einem Stückgutstapel mit einem Stückgutzuführer, einer getakteten Transporteinrichtung zur Stückgutvereinzelung und einer Einlaufrollenbahn mit einer Mehrzahl von antreibbaren Transportrollen sowie mit einem seitlichen Wartebereich, wobei der Stückgutzuführer, die Transporteinrichtung und die Einlaufrollenbahn hintereinander in einer gemeinsamen Vorschubrichtung angeordnet sind, wobei zwischen den Rollen der Einlaufrollenbahn ein quer zur Vorschubrichtung verfahrbarer Einführer vorgesehen ist, welcher eine Mehrzahl von gegenüber dem Niveau der Rollenoberseite anheb- und absenkbaren bügelförmigen Hubelementen aufweist, wobei im Bereich der Einlaufrollenbahn eine Schiebeeinrichtung zur Querverschiebung der jeweils gebildeten Stapellage auf eine seitlich der Einlaufrollenbahn angeordnete Stückgutstapeleinrichtung vorgesehen ist.

Die Erfindung betrifft darüber hinaus auch ein Verfahren zum Palettieren von Stückgütern zu einem Stückgutstapel mit einer vorgenannten Vorrichtung, bei welchem Stückgüter nacheinander einzeln von einem Stückgutzuführer zugeführt, nachfolgend in einer getakteten Transporteinrichtung in einer vorgegebenen Anzahl vereinzelt und dann vereinzelt einer Einlaufrollenbahn übergeben werden, wobei auf der Einlaufrollenbahn die jeweils erforderliche Anzahl an Stückgütern zunächst in einer Zeile zusammengeführt, dann vom Einführer angehoben und seitlich in den Wartebereich des Einführers verfahren werden, worauf dann wenigstens eine weitere Zeile der Stapellage durch Zusammenführung von Stückgutstapeln auf der Einlaufrollenbahn gebildet und die weitere Zeile dann vom Einführer angehoben und seitlich benachbart zu der bereits vorhandenen Zeile in den Wartebereich verschoben werden, wobei dann nach Bildung einer gesamten Stapellage diese Stapellage insgesamt seitlich verschoben und auf dem zu bildenen Stückgutstapel abgelegt wird.

Ein solches Verfahren und eine solche Vorrichtung sind bekannt (beispielsweise aus dem Prospektblatt der Anmelderin "Palettieranlagen für Säcke"). Dabei kann je nach der gewünschten Anordnung der Stückgüter in einer Stapellage zusätzlich auch noch vorgesehen sein, daß einige der vom Stückgutzuführer zugeführten Stückgüter vor der Vereinzelung um 90 gewendet werden. Unter Vereinzelung ist dabei zu verstehen, daß die Säcke in der Tat vereinzelt oder ohne Abstand zueinander zu zweit oder auch zu dritt von der Takteinrichtung der Einlaufrollenbahn übergeben werden.

Dabei wird bei den bekannten Vorrichtungen nach der Bildung einer jeweiligen Zeile einer Stapellage auf der Einlaufrollenbahn diese Zeile vom Einführer angehoben und seitlich in den Wartebereich der Einlaufrollenbahn verfahren, worauf dann der Einführer in seine Grundposition zurückverfährt und die nachfolgende, auf der Einlaufrollenbahn gebildete Zeile anhebt und ebenfalls in den seitlichen Wartebereich verfährt, und so weiter, bis eine komplette Stapellage gebildet ist, welche dann insgesamt von einer Schiebeeinrichtung seitlich auf zwei horizontal auseinanderfahrbare Schiebebleche der Stückgutstapeleinrichtung verschoben wird und durch Auseinanderfahren der Schiebebleche auf dem zu bildenden Stapel abgelegt wird. Je nach Auslegung lassen sich mit einer solchen Vorrichtung bereits nennenswerte Nennleistungen von einigen Tausend sackförmigen Stückgütern/h erreichen, dennoch besteht das Bestreben, diese Leistung weiter zu verbessern.

Aufgabe der Erfindung ist es deshalb, eine derartige Vorrichtung und ein derartiges Verfahren so zu verbessern, daß der Stückgutdurchsatz erhöht und somit die Stapelbildung weiter beschleunigt werden kann.

Diese Aufgabe wird mit einer Vorrichtung der eingangs bezeichneten Art erfindungsgemäß dadurch gelöst, daß die bügelförmigen Hubelemente des Einführers an ihrer Oberseite stufenförmig mit wenigstens zwei Stückgutauflagestufen ausgebildet sind, wobei jede Stufe der bügelförmigen Hubelemente über das Niveau der Rollenoberseite anhebbar ist.

Mit dieser Gestaltung des Einführers der erfindungsgemäßen Vorrichtung läßt sich eine deutliche Erhöhung des Stückgutdurchsatzes und damit Verkürzung der Stückgutstapelbildungszeit erreichen, da aufgrund der Ausbildung der bügelförmigen Hubelemente des Einführers der Einführer mit seinen bügelförmigen Hubelementen zunächst die erste Zeile der Lage mit den obersten Stückgutauflagestufen anheben und seitlich so weit in den Wartebereich verfahren kann, daß sich die nächst unterste Auflagestufe noch im Bereich der Rollenbahn befindet, und dann diese Stufe und ggf. entsprechend weitere Stufen jeweils ein weitere Zeile anhebt und dann gemeinsam mit der noch auf der obersten Stufe der Hubelemente befindlichen ersten Zeile in den Wartebereich verfahren kann. Der Einführer bewegt sich somit bei der Bildung einer Stapellage nur in eine Richtung und es ist nicht erforderlich, daß dieser, wie beim Stand der Technik, ständig von einer Position in die andere hin und her verfahren werden muß, wenn er eine Zeile im Wartebereich abgelegt hat. Vielmehr kann ohne Wartezeit jeweils die nächste Zeile sofort vom Einführer angehoben und seitlich verfahren werden.

In vorteilhafter Ausgestaltung der Vorrichtung ist vorgesehen, daß die in Vorschubrichtung gesehen ersten Rollen der Einlaufrollenbahn mit einer frei drehbaren rohrförmigen Ummantelung versehen sind. Dies ermöglicht es, die Stückgüter einwandfrei von der Takteinrichtung auf die Einlaufrollenbahn zu übergeben, auch wenn die Takteinrichtung und die Rollen der Einlaufrollenbahn mit unterschiedlicher Geschwindigkeit betrieben werden, was zur Erhöhung der Durchsatzgeschwindigkeit ebenfalls vorteilhaft möglich ist.

Dazu ist in vorteilhafter weiterer Ausgestaltung vorgesehen, daß der Antrieb der Rollen der Einführrollenbahn stufenlos regelbar ausgebildet ist. Dadurch ist es möglich, die Geschwindigkeit der Rollen der Einführrollenbahn stufenlos zu ändern, insbesondere beispielsweise zu erhöhen, sobald sämtliche Stückgüter einer Zeile sich im Bereich der Einlaufrollenbahn befinden, d.h. vollständig von der Takteinrichtung übergeben worden sind.

Die eingangs gestellte Aufgabe wird verfahrensmäßig mit einem gattungsgemäßen Verfahren erfindungsgemäß dadurch gelöst, daß bei der Stapellagenbildung auf der Einlaufrollenbahn der Einführer mit seinen bügelförmigen Hubelementen zunächst die erste Zeile der Lage mit den obersten Stückgutauflagestufen anhebt und seitlich so weit in den Wartebereich verfährt, daß sich die nächst unterste Auflagestufe noch im Bereich der Rollenbahn befindet, und dann diese Stufe und ggf. entsprechend weitere Stufen jeweils eine weitere Zeile anhebt und dann gemeinsam mit der noch auf der obersten Stufe der Hubelemente befindlichen ersten Zeile in den Wartebereich verfährt und nach Absenken sämtlicher Stückgüter der Stapellage in die Grundstellung seitlich zurückverfährt.

Erkennbar ist es aufgrund dieser Verfahrensführung nicht notwendig, den Einführer bei der Bildung einer Stapellage zum zwischenzeitlichen Ablegen einer jeweiligen Zeile seitlich hin und her zu verfahren, vielmehr bewegt sich der Einführer bei der Bildung einer Stapellage nur jeweils taktweise in eine Richtung und kann somit nach dem Verschieben einer Zeile unmittelbar die nächste Zeile anheben und verschieben.

In besonders vorteilhafter Ausgestaltung ist dabei vorgesehen, daß die Rollen der Einlaufrollenbahn vom stufenlos regelbaren Antrieb mit einer um wenigstens 10 % kleineren Geschwindigkeit als die Geschwindigkeit der getakteten Transporteinrichtung angetrieben werden. Aufgrund dieser gegenüber der Geschwindigkeit der Takteinrichtung verringerten Geschwindigkeit ist es möglich, die Bildung der jeweiligen Zeile zu beschleunigen. Gleichzeitig können die einzelnen Stückgüter staudrucklos gegen das am Ende der Einlaufrollenbahn vorhandene Anlaufblech gefahren werden, was insbesondere bei Säcken von besonderem Vorteil ist.

Dabei ist vorteilhaft weiterhin vorgesehen, daß die Geschwindigkeit der Rollen vom Antrieb erhöht wird, sobald sich sämtliche Stückgüter einer Zeile im Bereich der Einlaufrollenbahn befinden. Hierdurch kann noch zusätzlich die für die Bildung einer Zeile erforderliche Zeit verringert werden.

Es ist weiterhin möglich, die Stückgüter einer Zeile einzeln oder komplett von der Takteinrichtung der Einlaufrollenbahn zuzuführen. Dies hängt von den jeweiligen Gegebenheiten und insbesondere auch von der Größe der einzelnen Stückgüter ab.

Zur weiteren Verringerung der Stapelbildungszeit ist in zusätzlicher Ausgestaltung vorgesehen, daß der Einführer die erste Zeile der nächsten Stapellage bereits seitlich verfährt, bevor die Schiebebleche nach Abgabe der vorhergehend abgelegten Lage wieder geschlossen sind.

Die Erfindung ist nachstehend anhand der Zeichnung beispielsweise näher erläutert. Diese zeigt in
Fig. 1 eine Seitenansicht einer erfindungsgemäßen Vorrichtung,
Fig. 2 eine Draufsicht auf die Vorrichtung nach Fig. 1,
Fig. 3 und 4 eine Einlaufrollenbahn einer erfindungsgemässen Vorrichtung mit einem Einführer in unterschiedlichen Positionen,
Fig. 5 in vereinfachter Seitenansicht eine Einlaufrollenbahn mit Einführer in unterschiedlichen Einführpositionen (5.1 bis 5.8) und
Fig. 6 in Draufsicht ein gemäß Fig. 5 erstelltes Muster einer Stapellage.

Eine erfindungsgemäße Vorrichtung zum Palettieren von Stückgütern zu einem Stückgutstapel ist in der Zeichnung allgemein mit 1 bezeichnet. Diese Vorrichtung 1 weist hintereinander in einer gemeinsamen Vorschubrichtung 13 angeordnet zunächst einen beispielsweise als umlaufendes Förderband ausgebildeten Stückgutzuführer 2, eine Wendeeinrichtung 3, eine getaktete Transporteinrichtung 4 sowie eine Einlaufrollenbahn 5 auf.

Parallel hierzu sind hintereinander in bekannter Weise ein Leerpalettenmagazin 6, eine Leerpalettentransporteinrichtung 7, eine Stückgutstapeleinrichtung 8 sowie eine am Ausgang derselben angeordnete Stückgutstapeltransporteinrichtung 9 vorgesehen. Dabei werden im Leerpalettenmagazin 6 übereinandergestapelte Leerpaletten 10 bereitgehalten, von denen zur Bildung eines Stückgutstapels 11 jeweils eine einzeln mittels der Leerpalettentransporteinrichtung 7 der Stückgutstapeleinrichtung 8 zugeführt wird, in welcher auf nachfolgend noch näher beschriebene Weise übereinander im Bereich der Einlaufrollenbahn 5 jeweils gebildete Stapellagen gestapelt werden, worauf dann der vollständige Stückgutstapel 11 aus der Stückgutstapeleinrichtung 8 herausgeführt und der Stückgutstapeltransporteinrichtung, die in geeigneter Weise mit der Stückgutstapeleinrichtung 8 verbunden ist, zugeführt wird, worauf dann der vollständige Stückgutstapel 11 in der jeweils gewünschten Weise weiter transportiert werden kann.

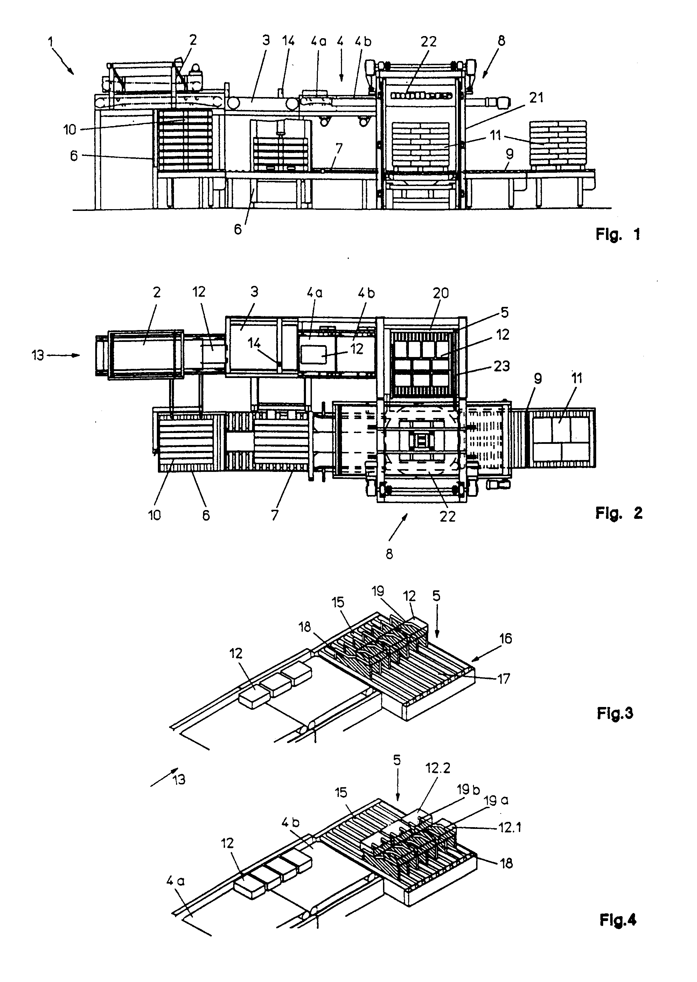

Wie in Fig. 2 zu erkennen, kommt auf dem Stückgutzuführer 2 beispielsweise ein einzelnes Stückgut 12 an, das im dargestellten Beispiel sackförmig ausgebildet ist. Dabei ist dieses sackförmige Stückgut 12 im gezeigten Ausführungsbeispiel auf dem Stückgutzuführer 2 so angeordnet, daß seine Längsseiten parallel zur Vorschubrichtung 13 sind. Soll das Stückgut 12 für eine besondere Zeilenausbildung um 90 gewendet werden, so erfolgt diese Wendung in der Wendeeinrichtung 3, welche dazu in bekannter Weise mit einem schwenkbaren Dreher 14 ausgerüstet ist.

Das jeweilige Stückgut 12 gelangt dann von der Wendeeinrichtung 3 in den Bereich der getakteten Transporteinrichtung 4, welche im dargestellten Ausführungsbeispiel zwei in Vorschubrichtung 13 gesehen hintereinander angeordnete umlaufende Taktbänder 4a und 4b aufweist. Mit dieser getakteten Transporteinrichtung 4, d.h. durch entsprechenden getakteten Antrieb der beiden Taktbänder 4a und 4b, ist es möglich, die ankommenden Stückgüter 12 zu vereinzeln, was bedeutet, daß abhängig von der Größe der Stückgüter 12 diese entweder einzeln oder beispielsweise unmittelbar hintereinanderliegend zu zweit taktweise der nachfolgenden Einlaufrollenbahn 5 zugeführt werden.

Diese Einlaufrollenbahn 5 weist etwa über der Breite der getakteten Transporteinrichtung 4 eine Mehrzahl von antreibbaren Transportrollen 15 sowie einen seitlichen Wartebereich 16 auf, der an die Stückgutstapeleinrichtung 8 angrenzt. Dieser Wartebereich 16 weist dabei ebenfalls Rollen 17 auf, die allerdings nicht angetrieben sind, die jedoch, selbstverständlich mit unterbrochener Achse, jeweils in Achsverlängerung der jeweiligen antreibbaren Transportrollen 15 liegen. Die antreibbaren Transportrollen 15 sowie die Rollen 17 sind jeweils in gewissem Abstand zueinander angeordnet, wobei zwischen den Rollen 15 bzw. 17 ein quer zur Vorschubrichtung 13 verfahrbarer Einführer 18 vorgesehen ist, welcher eine Mehrzahl von gegenüber dem Niveau der Rollenoberseite anheb- und absenkbare bügelförmige Hubelemente 19 aufweist, wobei diese bügelförmigen Hubelemente 19 eine Dicke aufweisen, die geringer ist als der jeweilige Abstand zwischen den Transportrollen bzw. den Rollen 17, derart, daß ein Anheben des Einführers 18 möglich ist, d.h. daß im angehobenen Zustand die bügelförmigen Hubelemente 19 zwischen den Transportrollen 15 hindurch über das Niveau derselben nach oben hinausstehen, so daß ein Anheben eines im Bereich der Einlaufrollenbahn 5 befindlichen Stückgutes 12 möglich ist. Darüber hinaus weist die Einlaufrollenbahn 5 noch eine Schiebeeinrichtung 20 auf, die in Fig. 2 nur angedeutet ist und dazu dient, die jeweils gebildete Stapellage auf die seitlich der Einlaufrollenbahn 5 angeordnete Stückgutstapeleinrichtung 8 zu verschieben.

Dazu ist die Anordnung so getroffen, wie dies am besten aus den Fig. 1 und 2 hervorgeht, daß die Stückgutstapeleinrichtung 8 an einem Rahmen 21 angeordnet zwei in Horizontalrichtung auseinander verfahrbare Schiebebleche 22 aufweist, wobei zur Übernahme einer im Bereich der Einlaufrollenbahn 5 gebildeten Stapellage die Schiebebleche 22 so angeordnet werden, daß von der Schiebeeinrichtung 20 die gebildete Stapellage auf die Schiebebleche 22 geschoben werden können. Anschließend oder gleichzeitig wird die Palette 10 leer oder mit bereits auf dieser gestapelten Lagen vertikal nach oben bis unter die Schiebebleche verfahren, um die auf den Schiebeblechen 22 befindliche Stapellage auf der Leerpalette 6 bzw. bereits auf auf dieser abgelegten Stapellagen abzulegen, was dadurch geschieht, daß die Schiebebleche 22 horizontal auseinanderfahren werden, so daß die Stapellage auf die darunter befindlichen Stapellagen bzw. die Leerpalette 10 absackt. Anschließend werden die Schiebebleche 22 dann wiederum in Horizontalrichtung geschlossen, um die nächste Stapellage von der Einlaufrollenbahn 5 zu übernehmen. Gleichzeitig wird die Palette 10 mit darauf befindlichen Stapellagen etwa um die Höhe einer Stapellage nach unten abgesenkt.

Wesentlich für die erfindungsgemäße Vorrichtung 1 ist die Gestaltung des Einführers 18 der Einlaufrollenbahn 5. Wie am besten aus den Fig. 3, 4 und 5 hervorgeht, sind die bügelförmigen Hubelemente 19 des Einführers 18 an ihrer Oberseite stufenförmig mit wenigstens zwei Stückgutauflagestufen 19a und 19b ausgebildet, wobei jede Stufe 19a, 19b über das Niveau der Rollenoberseite anhebbar ist. Dabei ist die Anordnung so getroffen, daß die jeweils höhere Stufe 19a der bügelförmigen Hubelemente 19 sich auf der Seite des Einführers 18 befindet, der unmittelbar an den seitlichen Wartebereich 16 der Einlaufrollenbahn 5 bzw. die Stückgutstapeleinrichtung 8 angrenzt.

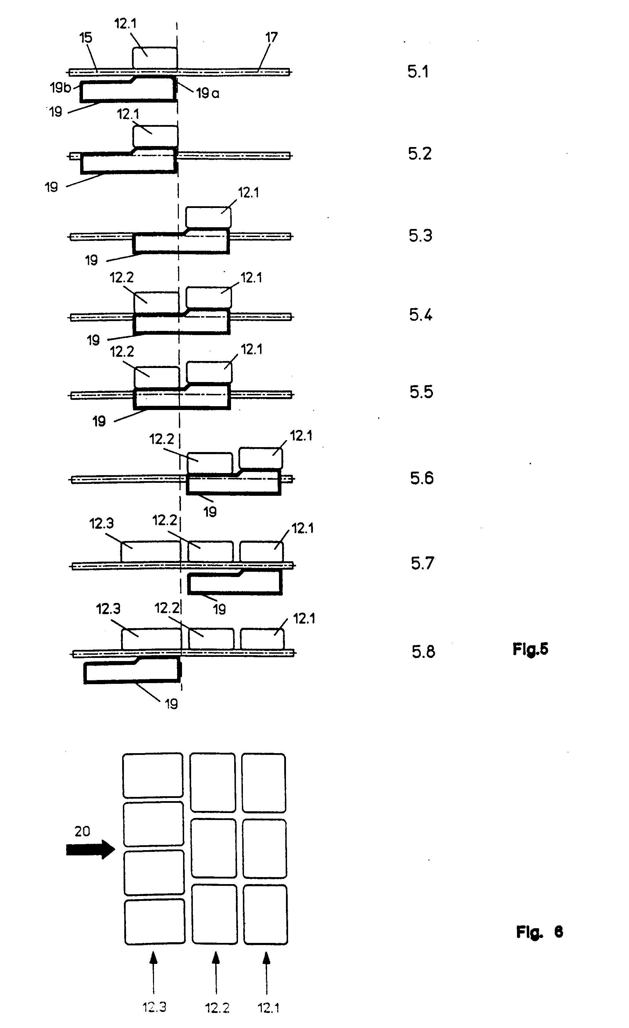

Durch diese Gestaltung der bügelförmigen Hubelemente 19 des Einführers 18 läßt sich die Verfahrensführung bei der Bildung einer Stapellage wesentlich beschleunigen, wie aus der nachfolgenden Beschreibung der Stapellagenbildung gemäß Fig. 5 hervorgeht.

Sobald von der getakteten Transporteinrichtung 4 der Einlaufrollenbahn 5 sämtliche Stückgüter 12 einer ersten Stückgutzeile 12.1 (Fig. 6) hintereinander zugeführt worden sind (5.1), hebt der Einführer 18 mit seinen bügelförmigen Hubelementen 19 zunächst diese erste Zeile 12.1 der Lage mit den obersten Stückgutauflagestufen 19a (Schritt 5.2) an und fährt diese erste Zeile 12.1 so weit in den Wartebereich 16, daß sich die nächst unterste Auflagestufe 19b der bügelförmigen Hubelemente 19 noch im Bereich der Rollenbahn 5, d.h. der Transportrollen 15 befindet (Schritt 5.3).

Sobald der Verfahrensschritt 5.3 vollendet ist, also die Stückgüter 12 der ersten Zeile 12.1 aus dem Bereich der antreibbaren Transportrollen 15 seitlich verschoben worden sind, wird unmittelbar die zweite Zeile 12.2 von Stückgütern 12 zugeführt, unter denen sich dann die bügelförmigen Hubelemente 19 des Einführers 18 mit ihren unteren Stückgutauflagestufen 19b befinden (Schritt 5.4). Wie dies der Verfahrensschritt 5.5 zeigt, werden dann unmittelbar die bügelförmigen Hubelemente 19 des Einführers 18 weiter vertikal nach oben angehoben, so daß sich die unteren Stückgutauflagestufen 19b über dem Niveau der Transportrollen 15 befinden und dementsprechend die Stückgüter 12 der zweiten Zeile 12.2 anheben. Anschließend wird der Einführer 18 dann vollständig nach links (Fig. 5) in den Wartebereich mit den Stapelzeilen 12.1 und 12.2 verfahren, wie dies Verfahrensschritt 5.6 zeigt. Nachfolgend wird dann gemäß Verfahrensschritt 5.7 der Einführer 18 derart abgesenkt, daß sich beide Stückgutauflagestufen 19a, 19b der bügelförmigen Hubelemente 19 unterhalb des Niveaus der Oberkante der Transportrollen 15 bzw. der Rollen 17 befinden (Verfahrensschritt 5.7) und der Einführer 18 wird dann in den Bereich der Einlaufrollenbahn 5 nach rechts (Fig. 5) gemäß Verfahrensschritt 5.8 seitlich in seine Ausgangsposition zurückverfahren, wo bereits eine dritte Stapelzeile 12.3 gebildet worden ist. Diese Stapelzeile 12.3 besteht im Ausführungsbeispiel gemäß Fig. 5 und 6 beispielsweise aus um 90 gewendeten Stückgütern 12. Der Einführer 18 verbleibt dabei in der Position gemäß Verfahrensschritt 5.8, d.h. er hebt die dritte Zeile 12.3 von Stückgütern 12 nicht mehr an, da gemäß diesem Ausführungsbeispiel die gewünschte Stapellage bereits vollständig ist. Diese vollständige Stapellage gemäß Fig. 6 wird dann von der Schiebeeinrichtung 20, die in Fig. 6 nur durch einen Pfeil angedeutet ist, vollständig auf die Schiebebleche 22 der Stückgutstapeleinrichtung 8 seitlich verschoben, wie dies vorstehend bereits beschrieben worden ist.

Erkennbar ist aufgrund dieser Gestaltung des Einführers 18 mit den stufenförmig gestalteten bügelförmigen Enden 19 ein Hin- und Her-Verfahren des Einführers 18 zum seitlichen Verschieben der Zeilen 12.1 und 12.2 in den Wartebereich 16 nicht erforderlich, was den Stapellagenbildungsvorgang wesentlich beschleunigt. Es ist selbstverständlich, daß dann, wenn eine Stapellage aus mehr als drei Zeilen bestehen soll, der Einführer 18 auch mehr als zwei Stückgutauflagestufen 19a, 19b aufweisen kann, beispielsweise drei, wenn die zu bildende Stapellage vier Zeilen aufweist und dgl. mehr.

Auch wenn dies zeichnerisch nicht im einzelnen zu erkennen ist, ist vorteilhaft vorgesehen, daß die in Vorschubrichtung 13 gesehen ersten Rollen 15 der Einlaufrollenbahn 5 mit einer frei drehbaren rohrförmigen Ummantelung, z.B. aus Teflon versehen sind und daß der nicht dargestellte Antrieb der Transportrollen 15 stufenlos regelbar ausgebildet ist. Dies bietet den zusätzlichen Vorteil, daß die Transportrollen 15 der Einlaufrollenbahn vom stufenlos regelbaren Antrieb zunächst bei der Bildung einer Zeile mit einer um wenigstens 10 % kleineren Geschwindigkeit als die Geschwindigkeit der getakteten Transporteinrichtung 4 angetrieben werden können, und daß anschließend die Geschwindigkeit der Rollen 15 vom Antrieb stufenlos erhöht wird, sobald sich sämtliche Stückgüter 12 einer Zeile im Bereich der Einlaufrollenbahn 5 befinden. Dies ermöglicht bei einwandfreier Übergabe von der Takteinrichtung 4 auf die Einlaufrollenbahn 5 eine beschleunigte Zeilenbildung und zugleich ein staudruckloses Anfahren der Stückgüter 12 einer Zeile gegen ein am Ende der Einlaufrollenbahn 5 befindlichen Anlaufblech 23. Eine weitere Verfahrensbeschleunigung läßt sich dadurch erzielen, daß der Einführer 18 die nächste Zeile 12.1 einer nächsten Stapellage bereits seitlich verfährt, bevor die Schiebebleche 22 nach Abgabe der zuvor abgelegten Stapellage wieder geschlossen sind, d.h. dann, wenn die Schiebebleche 22 der Stückgutstapeleinrichtung 8 noch offen sind.

Natürlich ist die Erfindung nicht auf die dargestellten Ausführungsbeispiele beschränkt. Weitere Ausgestaltungen sind möglich, ohne den Grundgedanken zu verlassen. So eignet sich die erfindungsgemäße Vorrichtung selbstverständlich auch zur Palettierung von anderen Stapelmustern, sofern wenigstens drei Zeilen gebildet werden.

## Patentansprüche

1. Vorrichtung zum Palettieren von Stückgütern zu einem Stückgutstapel mit einem Stückgutzuführer, einer getakteten Transporteinrichtung zur Stückgutvereinzelung und einer Einlaufrollenbahn mit einer Mehrzahl von antreibbaren Transportrollen sowie mit einem seitlichen Wartebereich, wobei der Stückgutzuführer, die Transporteinrichtung und die Einlaufrollenbahn hintereinander in einer gemeinsamen Vorschubrichtung angeordnet sind, wobei zwischen den Rollen der Einlaufrollenbahn ein quer zur Vorschubrichtung verfahrbarer Einführer vorgesehen ist, welcher eine Mehrzahl von gegenüber dem Niveau der Rollenoberseite anheb- und absenkbaren bügelförmigen Hubelementen aufweist, wobei im Bereich der Einlaufrollenbahn eine Schiebeeinrichtung zur Querverschiebung der jeweils gebildeten Stapellage auf eine seitlich der Einlaufrollenbahn angeordnete Stückgutstapeleinrichtung vorgesehen ist,
dadurch gekennzeichnet,
daß die bügelförmigen Hubelemente (19) des Einführers (18) an ihrer Oberseite stufenförmig mit wenigstens zwei Stückgutauflagestufen (19a,19b) ausgebildet sind, wobei jede Stufe (19a,19b) der bügelförmigen Hubelemente (19) über das Niveau der Rollenoberseite anhebbar ist.

2. Vorrichtung nach Anspruch 1,
dadurch gekennzeichnet,
daß die in Vorschubrichtung (13) gesehen ersten Rollen (15) der Einlaufrollenbahn (5) mit einer frei drehbaren rohrförmigen Ummantelung versehen sind.

3. Vorrichtung nach Anspruch 1 oder 2,
dadurch gekennzeichnet,
daß der Antrieb der Rollen (15) der Einführrollenbahn (5) stufenlos regelbar ausgebildet ist.

4. Verfahren zum Palettieren von Stückgütern zu einem Stückgutstapel mit einer Vorrichtung nach Anspruch 1 oder einem der folgenden, bei welchem Stückgüter nacheinander einzeln von einem Stückgutzuführer zugeführt, nachfolgend in einer getakteten Transporteinrichtung in einer vorgegebenen Anzahl vereinzelt und dann vereinzelt einer Einlaufrollenbahn übergeben werden, wobei auf der Einlaufrollenbahn die jeweils erforderliche Anzahl an Stückgütern zunächst in einer Zeile zusammengeführt, dann vom Einführer angehoben und seitlich in den Wartebereich des Einführers verfahren werden, worauf dann wenigstens eine weitere Zeile der Stapellage durch Zusammenführung von Stückgutstapeln auf der Einlaufrollenbahn gebildet und die weitere Zeile dann vom Einführer angehoben und seitlich benachbart zu der bereits vorhandenen Zeile in den Wartebereich verschoben werden, wobei dann nach Bildung einer gesamten Stapellage diese Stapellage insgesamt seitlich verschoben und auf dem zu bildenen Stückgutstapel abgelegt wird,
dadurch gekennzeichnet,
daß bei der Stapellagenbildung auf der Einlaufrollenbahn der Einführer mit seinen bügelförmigen Hubelementen zunächst die erste Zeile der Lage mit den obersten Stückgutauflagestufen anhebt und seitlich so weit in den wartebereich verfährt, daß sich die nächst unterste Auflagestufe noch im Bereich der Rollenbahn befindet, und dann diese Stufe und ggf. entsprechend weitere Stufen jeweils eine weitere Zeile anhebt und dann gemeinsam mit der noch auf der obersten Stufe der Hubelemente befindlichen ersten Zeile in den Wartebereich verfährt und nach Absenken sämtlicher Stückgüter der Stapellage in die Grundstellung seitlich zurückverfährt.

5. Verfahren nach Anspruch 4,
dadurch gekennzeichnet,
daß die Rollen der Einlaufrollenbahn vom stufenlos regelbaren Antrieb mit einer um wenigstens 10 % kleineren Geschwindigkeit als die Geschwindigkeit der getakteten Transporteinrichtung angetrieben werden.

6. Verfahren nach Anspruch 5,
dadurch gekennzeichnet,
daß die Geschwindigkeit der Rollen vom Antrieb erhöht wird, sobald sich sämtliche Stückgüter einer Zeile im Bereich der Einlaufrollenbahn befinden.

7. Verfahren nach Anspruch 4 oder einem der folgenden, dadurch gekennzeichnet,
daß die Stückgüter einer Zeile einzeln oder komplett von der Takteinrichtung der Einlaufrollenbahn zugeführt werden.

8. Verfahren nach Anspruch 4 oder einem der folgenden, dadurch gekennzeichnet,
daß der Einführer die erste Zeile der nächsten Stapellage bereits seitlich verfährt, bevor die Schiebebleche nach Abgabe der vorhergehend abgelegten Lage wieder geschlossen sind.
